# FASCICULE DE BREVET EUROPEEN

(11) **EP 0 686 352 B1**
(45) Date de publication et mention de la délivrance du brevet: **28.07.1999**
(21) Numéro de dépôt: 95200631.0
(22) Date de dépôt: 16.03.1995
(51) Int. Cl.: A23L 1/105, A23L 3/015

(54) **Procédé de fabrication d'un produit alimentaire amylacé**
Verfahren zur Herstellung eines stärkehaltigen Nahrungsmittels
Method for preparing a starch based food product

(30) Priorité: 24.05.1994 EP 94107939
(43) Date de publication de la demande: 13.12.1995
(73) Titulaire: SOCIETE DES PRODUITS NESTLE S.A., 1800 Vevey (CH)
(72) Inventeur: Crelier, Simon, CH-1076 Ferlens (CH); Raemy, Alois, CH-1814 La Tour-de-Peilz (CH); Raetz, Eric, CH-1018 Lausanne (CH); Badertscher, Ernest, CH-1350 Orbe (CH)

(56) Documents cités:
- EP-A- 0 031 050
- CHEMICAL ABSTRACTS, vol. 113, no. 7, 13 Août 1990 Columbus, Ohio, US; abstract no. 57385k, A. HARA ET AL.: "Effects of high pressures on inactivation of enzymes and microorganisms in non-pasteurized rice wine (namazake)" page 552; XP002003295 & NIPPON NOGEI KK, vol. 64, no. 5, 1990, pages 1025-1029,
- CHEMICAL ABSTRACTS, vol. 66, no. 7, 13 Février 1967 Columbus, Ohio, US; abstract no. 26177a, KIYOSHI KITAMURA: "Inactivation of enzymes under high pressure. II. Inactivation of bacterial alkaline proteinase and -amylase of barley under high pressure" page 2464; XP002003296 & REV. PHYS. CHEM. JAP., vol. 36, no. 1, 1966, pages 44-53,
- CHEMICAL ABSTRACTS, vol. 69, no. 19, 4 Novembre 1968 Columbus, Ohio, US; abstract no. 83702d, SUGIURA MAMORU ET AL.: "Enzyme preparations. XXVI. Influence of high hydrostatic pressure on amylase activity" page 7821; XP002003297 & YAKUZAIGAKU, vol. 28, no. 1, 1968, pages 47-50,
- FOOD TECHNOLOGY, vol. 43, no. 3, Mars 1989, CHICAGO US, pages 101-102, XP000025469 D.G. HOOVER ET AL.: "Biological Effects of High Hydrostatic Pressures on Food Microorganisms"
- VOEDINGSMIDDELEN TECHNOLOGIE, vol. 26, no. 15, 15 Juillet 1993, ZEIST NL, pages 11-13, XP000381863 J.P.P.M. SMELT ET AL. : "Conserviering van voedingsmiddelen met ultrahoge druk"

## Description

La présente invention a pour objet un procédé de fabrication d'un produit alimentaire amylacé.

La production de dextrines ou de dextrose à partir de matières premières riches en amidon telles que des céréales ou les pommes de terre est pratiquée depuis fort longtemps. Le procédé classique consiste à liquéfier tout d'abord un mélange de la matière première ou de son amidon par hydrolyse enzymatique à l'aide d'une α-amylase, à saccharifier ensuite la liqueur obtenue en l'hydrolysant à l'aide d'une amyloglucosidase ou d'une β-amylase, puis à inactiver les enzymes en stérilisant ladite liqueur à la chaleur, par exemple.

EP 0031050 décrit ainsi un procédé de fabrication d'un produit alimentaire amylacé pulvérulent facilement miscible à l'eau, dans lequel on prépare un mélange d'une matière amylacée et d'eau, on le cuit et on le liquéfie par hydrolyse enzymatique, on prépare un second mélange de matière amylacée, d'eau et d'une partie au moins du premier mélange liquéfié, de manière que le second mélange présente une teneur en matière sèche de 35 à 45% en poids, on cuit le second mélange, on le liquéfie par hydrolyse enzymatique, on le stérilise à la chaleur pour inactiver les enzymes et on le sèche par pulvérisation.

Dans ces procédés, les enzymes sont donc classiquement inactivées par la chaleur, ceci afin d'assurer une qualité hygiénique de l'aliment par l'inactivation partielle ou totale des enzymes de détérioration de l'aliment. On évite ainsi des transformations indésirables du produit alimentaire final, par exemple une destruction de la texture du produit et/ou une modification de son goût lors de son stockage.

Cependant, ces traitements présentent l'inconvénient d'induire une diminution de la valeur nutritive de l'aliment, par exemple une réduction de sa teneur en vitamines, une perte de sa fraîcheur, et une dégradation de sa texture.

De nombreux procédés alternatifs ont été proposés dans le but de stériliser des produits alimentaires ou d'inactiver des enzymes endogènes présentes dans ces produits.

FR 2650942 décrit ainsi un procédé d'inactivation des enzymes de détérioration des aliments par chauffage sous une atmosphère gazeuse confinée sous pression élevée, ladite atmosphère comprenant initialement du gaz carbonique et/ou du protoxyde d'azote.

De même, EP 480422 décrit une méthode de stérilisation d'un jus de fruit combinée à l'inactivation des pectinases naturellement présentes dans ce jus. On soumet ainsi ce jus de fruit premièrement à une digestion protéolytique, puis à une haute pression. Ces deux traitements permettent d'inactiver les pectinases endogènes, tandis que les micro-organismes sont détruits par la seule haute pression.

En outre Hara *et al*. décrit l'inactivation de carbohydrases et de protéases contenues dans un alcool de riz par une pression d'au moins 6000 kg/cm2, à température ambiante. Il est précisé que la concentration en alcool concourt à inactiver les enzymes (Chemical Abstract, 113, n°57385k).

Kiyoshi Kitamura décrit l'inactivation de protéase alcaline bactérienne et de ß-amylase d'orge par des hautes pressions, ainsi que l'effet de la pression sur l'inactivation de ces mêmes enzymes par la chaleur (Chemical Abstract, 66, n°26177a).

De même, Sugiura Mamoru *et al*. étudie l'influence de fortes pressions hydrostatiques sur l'activité d'amylases d'origines diverses (Chemical Abstract, 69, n°83702d).

Enfin, D.G. Hoover *et al*. décrit les effets de hautes pressions hydrostatiques sur l'inactivation de différents micro-organismes utilisés dans le domaine alimentaire (Food Technology, 43, 101-102).

Ainsi, la plupart des procédés d'inactivation d'enzymes faisant appel à la haute pression dans des conditions modérées de température, utilisent des gaz ou des composés chimiques tels que des inhibiteurs ou de l'alcool, par exemple, pour pouvoir inactiver de manière significative ces enzymes. La haute pression seule, semble donc ne pas suffire à inactiver certaines enzymes, et en particulier les enzymes endogènes.

De plus, ces procédés n'envisagent pas d'inactiver sélectivement une enzyme exogène qui a été préalablement ajoutée à un aliment en vue de le transformer.

Le but de la présente invention est l'inactivation sélective de carbohydrases présentes dans produit alimentaire amylacé, à des températures modérées, permettant une bonne conservation des propriétés nutritives, organoleptiques et de texture de ce produit traité.

### Résumé de l'invention

A cet effet, dans un procédé de fabrication d'un produit alimentaire amylacé, on prépare un mélange par hydrolyse enzymatique comprenant au moins une matière amylacée et de l'eau, on le gélifie, on le soumet à une hydrolyse enzymatique, puis a une pression hydrostatique de 300-1100 Mpa et à une température de 10-90°C.

En effet, on a constaté avec surprise qu'il est possible d'inactiver sélectivement des carbohydrases exogènes ajoutées à une matière amylacée par la seule haute pression, à des températures modérées, alors que ces enzymes provenant de source microbienne en général, sont connues pour être plus résistantes que les mêmes enzymes endogènes.

La présente invention offre donc l'avantage que l'on peut sélectivement inactiver une carbohydrase préalablement ajoutée à un aliment amylacé pour réaliser une transformation biochimique. Le procédé permet ainsi de contrôler avec précision, dans le temps, l'action d'une carbohydrase exogène dans un aliment.

Enfin, on peut préparer un produit alimentaire amylacé hydrolysé qui présente des qualités organoleptiques, nutritives et de texture préservés, dans le sens où l'on peut mettre en oeuvre un procédé de préparation d'un tel produit dans lequel les températures appliquées sont inférieures à 135°C, voire même inférieures à 90°C.

La présente invention offre également l'avantage que l'on peut gélatiniser et stériliser un mélange de farine et d'eau, par un traitement à une haute pression et à une température modérée, ce qui permet de conserver d'autant plus les qualités du produit traité.

Dans la suite de la description, on entend par "enzyme saccharolytique" une enzyme capable de couper une chaîne de sucres. Une telle enzyme peut être, par exemple, une α-amylase, une β-amylase, une gluco-amylase ou une pullulanase.

De même, par "enzyme du type carbohydrase" on comprend une enzyme agissant sur des sucres, telles qu'une enzyme saccharolytique ou une invertase, par exemple.

### Description détaillée de l'invention

Pour mettre en oeuvre le présent procédé, on prépare donc un mélange comprenant au moins une matière amylacée et de l'eau.

La matière amylacée peut être une semoule et/ou une farine, voire un amidon de céréales ou de mélange de céréales, notamment de blé, d'orge, d'avoine, de seigle, de riz et/ou de maïs. De préférence, on utilise un produit de meunerie de tout degré d'extraction, de la farine de fleur (60% du grain) au gruau (95% du grain). En outre, on peut utiliser également comme matière amylacée d'autres matières végétales riches en amidon telles que les graines de certaines légumineuses notamment le soja, et/ou certaines tubercules notamment les pommes de terre et/ou certaines racines notamment le céleri et la betterave, par exemple.

Le mélange d'une matière amylacée et d'eau peut ainsi comprendre une teneur en matière sèche de 10 à 50% en poids, mais de préférence 25 à 35% en poids.

Le mélange est ensuite gélifié, c'est à dire soumis à des conditions telles que l'amidon du mélange passe d'une structure cristalline à une structure amorphe, devient plus perméable à l'eau, et devient plus susceptible d'être digéré par des enzymes. On préfère simultanément gélifier et stériliser le mélange de manière aussi à inactiver tous les microorganismes et enzymes contaminants susceptibles d'altérer le produit. Pour cela, on peut injecter dans le mélange de la vapeur à une température de 130-160°C durant 15-60s, par exemple. Mais on peut aussi soumettre le mélange à un traitement thermique modéré sous haute pression hydrostatique, par exemple à une pression hydrostatique de 100-1100MPa, de préférence 300-1000MPa, et à une température de 10-120°C, de préférence 10-90°C, pendant 15 à 600s. Etant donné la viscosité du mélange ainsi stérilisé et gélifié, on peut prévoir un mélangeur statique sur la ligne.

Après la gélification du mélange, pouvant comprendre une stérilisation simultanée, on peut refroidir le mélange directement à la température d'hydrolyse, par détente ou à l'aide d'un échangeur de chaleur, selon les cas.

On peut aussi ajouter au mélange, avant ou après l'étape de gélification décrite ci-dessus, ou avant ou après l'étape d'hydrolyse décrite ci-dessous, des compléments nutritifs, notamment des solides du lait écrémé ou du petit lait ou des matières grasses, selon l'usage auquel on destine le produit final. Si l'on désire produire une poudre pour soupe, par exemple, on ajoutera de préférence de la matière grasse, notamment une graisse végétale telle qu'une graisse de palme, de coco, de tournesol, de maïs et/ou de soja, à raison de 20 à 40% en poids de la farine ou du gruau mis en oeuvre. Enfin, si l'on désire produire une poudre pour boisson acide, on peut ajouter des compléments nutritifs au mélange, notamment du lactose, et le soumettre à une fermentation, notamment par des bactéries lactiques, par exemple.

On effectue ensuite une hydrolyse du mélange gélifié par des carbohydrases techniques. On peut ainsi utiliser du malt diastasique comprenant des carbohydrases, ou des enzymes du commerce telles que des enzymes saccharolytiques, notamment des α-amylases, des β-amylases, pullulanases, et des gluco-amylases, et/ou des invertases, et/ou des isomérases, par exemple. Ces enzymes peuvent être d'origine végétale ou microbienne, c'est-à-dire produites par des bactéries, des levures ou des moisissures, par exemple. On peut aussi inactiver des enzymes bactériennes thermostables, c'est-à-dire des enzymes qui conservent leur activité catalytique jusqu'à des températures d'au moins 80°C, par exemple.

On peut donc réaliser l'hydrolyse avec une composition comprenant une ou plusieurs enzymes exogènes du type carbohydrase, pendant un temps et une durée adéquats pour réaliser une transformation désirée dudit produit, par exemple pendant 10-120 min à une température de 30-90°C. Quant à la quantité d'enzymes à utiliser, elle dépend entre autres de leur activité, de la composition du produit alimentaire et des conditions d'hydrolyse. A titre d'orientation, on peut mentionner un chiffre de l'ordre de 5% d'extrait de malt diastasique ou 0,1% de l'α-amylase bactérienne B100 (International Biosynthetics, Hollande) par rapport au poids de farine ou de gruau mis en oeuvre pour la production d'un produit alimentaire amylacé destiné pour un petit déjeuné instantané, ou destiné pour la nutrition infantile, par exemple.

De préférence, on hydrolyse le produit à base d'une matière amylacée par au moins une enzyme saccharolytique pour agir sur la fluidité et/ou sur le pouvoir sucrant de ce produit, selon l'usage auquel on le destine. Si par exemple, on désire un produit comprenant des dextrines, on peut favoriser l'activité d'une α-amylase qui fragmente l'amidon au hasard en courtes chaînes. Un tel produit, une fois séché, présente un pouvoir épaississant qui le destine à la préparation de potages ou de soupes, par exemple. Si au contraire, on désire un produit à pouvoir sucrant, on peut favoriser l'activité de la β-amylase qui détache des molécules de maltose l'une après l'autre, à partir d'une extrémité de l'amidon.

Enfin, on soumet le mélange hydrolysé à une pression de 300-1100 MPa et à une température de 10-90°C, et de préférence à une pression hydrostatique de 400-1000 MPa et à une température de 20-80°C, voire 30-70°C.

Pour appliquer la haute pression, on n'utilise aucuns inhibiteurs ou gaz particuliers. De préférence, on applique à la matière alimentaire une pression hydrostatique, c'est-à-dire une pression transmise par un liquide. Pour cela, on peut isoler cette matière du liquide utilisé pour transmettre la haute pression, par exemple de l'eau ou de l'huile, par des moyens d'emballage de l'aliment notamment dans des récipients déformables en plastique ou en aluminium, par exemple. Ces récipients peuvent être ensuite placés dans une chambre d'un dispositif de haute pression, par exemple un autoclave, dans laquelle on applique le traitement sous haute pression pendant un temps et à une température adéquats pour obtenir une inactivation des enzymes exogènes. On peut aussi directement amener le mélange hydrolysé par le moyen de conduits appropriés dans une chambre d'un dispositif de haute pression, par exemple un autoclave, dans laquel on appliquera la pression et la température désirées, par exemple.

Le temps de traitement peut être supérieur à 30 min, et de préférence supérieur à 10 min. De plus, ce temps de traitement commence à partir du moment où l'on atteint la pression et la température désirées, le temps nécessaire pour atteindre ces valeurs étant en moyenne de l'ordre de 1 min, par exemple.

Finalement, on peut sécher le mélange hydrolysé et inactivé par pulvérisation, selon l'usage auquel on destine le produit.

Dans une mise en oeuvre particulière du présent procédé, on prépare un premier mélange de matière amylacée et d'eau, on le cuit et on le liquéfie par hydrolyse enzymatique, puis on prépare un second mélange de matière amylacée, d'eau et d'une partie au moins du premier mélange liquéfié, on cuit le second mélange, on le liquéfie par hydrolyse enzymatique, et on le soumet à une pression hydrostatique de 300-1100MPa et à une température de 10-90°C. Ce procédé peut être mis en oeuvre en continu ou en discontinu. En effet dans un procédé continu, une partie du mélange une fois cuit peut être recyclé directement dans le mélange avant cuisson (voir EP0031050).

De préférence, on remplace l'étape de cuisson du premier et/ou du deuxième mélange par une étape de traitement à une pression hydrostatique de 300-1100MPa et à une température de 10-90°C.

Le procédé selon la présente invention est décrit plus en détails dans les exemples présentés ci-après à titre d'illustration. Ces exemples sont précédés d'une brève description des dessins.

### Dessins

Figure 1: représentation de l'activité relative d'une α-amylase bactérienne présente dans deux hydrolysats de céréales en fonction du temps de traitement à 650 MPa et 60°C.
Figure 2: représentation de l'activité relative d'une α-amylase végétale présente dans un hydrolysat de blé en fonction du temps de traitement à 900 MPa et 30°C.
Figure 3: représentation de l'activité relative de deux α-amylases, bactérienne et végétale, présentes dans deux hydrolysats de céréales en fonction du temps de traitement à 900 MPa et 60°C.

### Exemple 1

Dans un processus continu similaire à celui décrit dans EP0031050, on mélange 200kg/h d'un farine de riz à 13% d'humidité avec 176 kg/h d'eau potable à 15°C et 427kg/h de liqueur de riz hydrolysé présentant une matière sèche de 41%. On chauffe le mélange à 135°C par injection de vapeur, on le fait passer dans un mélangeur statique, on le fait suivre dans une conduite d'attente et, après l'avoir maintenu ainsi à 135°C durant un temps total de 110s, on le refroidit à 68°C par détente dans une cuve étanche à double paroi où une pression égale à la pression de vapeur du mélange à 68°C est maintenue à l'aide d'un condensateur. On déverse dans cette même cuve 30kg/h d'un mélange d'enzymes bactériennes commerciales diluées de manière à ce que le mélange comprenne 0,02% de poudre de l'α-amylase B100 (International Biosynthetics, Hollande) par poids de matière sèche, et 0,15% de la glucoamylase NOVO 300L (NOVO, Danemark) par poids de matière sèche. Le mélange doucement agité séjourne 5 min dans cette première cuve, puis est introduit dans une cuve d'attente à paroi double et mélangeur où l'on maintient une température de 68°C à pression atmosphérique pendant 1 h.

On divise le flot de liqueur ainsi obtenue sortant de la dernière cuve en deux courants, l'un de 427 kg/h que l'on recycle, et l'autre de 428 kg/h que l'on récupère dans des récipients déformables en plastique.

Ces récipients sont ensuite immergés au sein d'un fluide transmetteur de pression contenu dans un autoclave. Une pression de 650MPa est obtenue par l'intermédiaire d'une pompe. La température de 60°C est ajustée par circulation d'un fluide caloporteur dans un double manteau. Les récipients sont alors soumis à l'influence combinée de la température et de la pression hydrostatique durant plusieurs périodes de temps différents.

Finalement, on mesure l'activité résiduelle des enzymes en fonction du temps par la méthode dite de Phadebas (Kit Pharmacia Diagnostics, Suède). Pour ce faire, un colorant lié à de l'amidon est scindé par l'enzyme résiduelle, puis la concentration de colorant libérée est mesurée par l'intermédiare de son absorbance par spectrophotométrie. L'activité de l'enzyme est ainsi directement proportionelle à la valeur d'absorbance mesurée après un temps détermine. On exprime ensuite l'activité relative de l'enzyme par la différence entre l'activité résiduelle mesurée et son activité avant traitement.

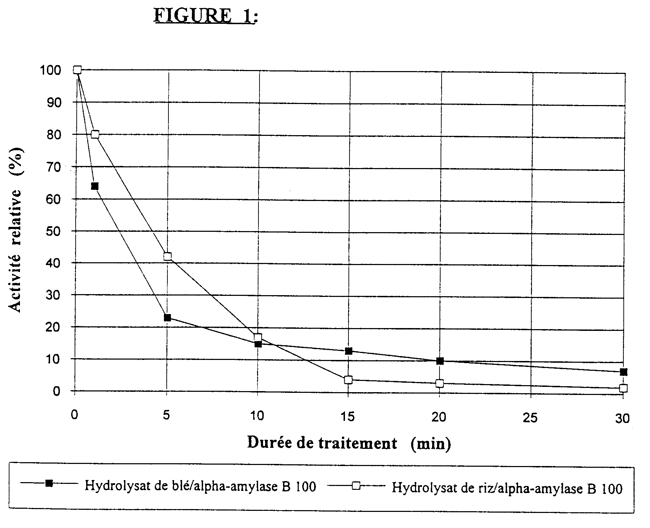

Les résultats présentés sur la figure 1 montrent que l'activité α-amylasique résiduelle du mélange est réduite à 42% de l'activité initiale après 5 min de traitement, à moins de 4% de l'activité initiale après 15 min de traitement, et à moins de 2% après 30 min de traitement.

En outre, l'activité amyloglucosidasique résiduelle du mélange est réduite également dans les mêmes proportions en fonction du temps que celles de l'α-amylase du mélange décrites ci-dessus..

### Exemple 2

Le mélange hydrolysé de farine de riz et d'eau de l'exemple 1, contenu dans des récipients déformables, est soumis à une pression hydrostatique de 900 MPa et à une température de 60°C, pendant plusieurs périodes de temps différents, de la même manière que celle décrite à l'exemple 1. Finalement, on mesure l'activité résiduelle de l'enzyme en fonction du temps.

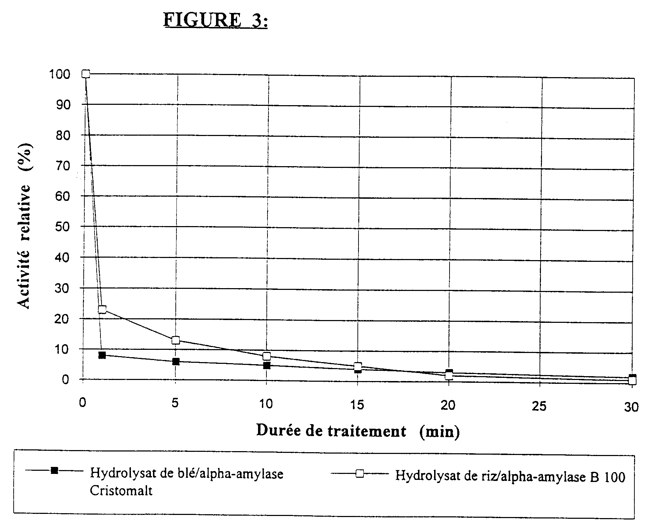

Les résultats présentés sur la figure 3 montrent que l'activité α-amylasique résiduelle est réduite à moins de 13% de l'activité initiale après 5 min de traitement, à moins de 5% de l'activité initiale après 15 min de traitement, et n'est plus mesurable (inférieure à 1%) après un traitement de 30 min.

En outre, l'activité amyloglucosidasique résiduelle du mélange est réduite également dans les mêmes proportions en fonction du temps que celle de l'α-amylase du mélange décrites ci-dessus.

### Exemple 3

Dans un processus semblable à celui décrit à l'exemple 1, on réalise l'hydrolyse d'une farine de blé à 13,7% d'humidité en déversant dans la cuve 30kg/h de l'α-amylase bactérienne commerciale B100 diluée de manière à ce que le mélange comprenne 0,1% de poudre d'enzyme par poids de matière sèche. Le mélange doucement agité séjourne 5 min dans cette première cuve, puis est introduit dans une cuve d'attente à paroi double et mélangeur où l'on maintient une température de 80°C à pression atmosphérique pendant 15 min.

On divise le flot de liqueur présentant une matière sèche de 41% en deux courants, l'un de 421kg/h que l'on recycle à 200kg/h de farine de blé et 164kg/h d'eau qui seront cuits comme à l'exemple 1, et l'autre de 422kg/h que l'on récupère dans des récipients déformables en plastique.

Le mélange hydrolysé de farine de blé est soumis à une pression hydrostatique de 650 MPa et à une température de 60°C, pendant plusieurs périodes de temps différents, de la même manière que celle décrite à l'exemple 1. Finalement, on mesure l'activité résiduelle de l'enzyme en fonction du temps.

Les résultats présentés sur la figure 1 montrent que l'activité α-amylasique résiduelle est réduite à moins de 22% de l'activité initiale après 5 min de traitement, à moins de 12% de l'activité initiale après 15 min de traitement, et à moins de 7% après un traitement de 30 min.

### Exemple 4

Dans un processus semblable à celui décrit à l'exemple 1, on réalise l'hydrolyse d'une farine de blé à 13,7% d'humidité en déversant dans la cuve 30 kg/h d'un extrait de malt comprenant une α-amylase végétale (Cristomalt, NESTLE) diluée de manière à ce que le mélange comprenne 1% d'extrait sec par poids de matière sèche. Le mélange doucement agité séjourne 5 min dans cette première cuve, puis est introduit dans une cuve d'attente à paroi double et mélangeur où l'on maintient une température de 80°C à pression atmosphérique pendant 15 min.

On divise le flot de liqueur présentant une matière sèche de 41% en deux courants, l'un de 421kg/h que l'on recycle à un mélange comprenant 200kg/h de farine de blé et 165kg/h d'eau qui seront cuits comme à l'exemple 1, et l'autre de 424kg/h que l'on récupère dans des récipients déformables en plastique.

Le mélange hydrolysé de farine de blé est soumis à une pression hydrostatique de 900 MPa et à une température de 60°C ou de 30°C, pendant plusieurs périodes de temps différents, de la même manière que celle décrite à l'exemple 1. Finalement, on mesure l'activité résiduelle de l'enzyme en fonction du temps.

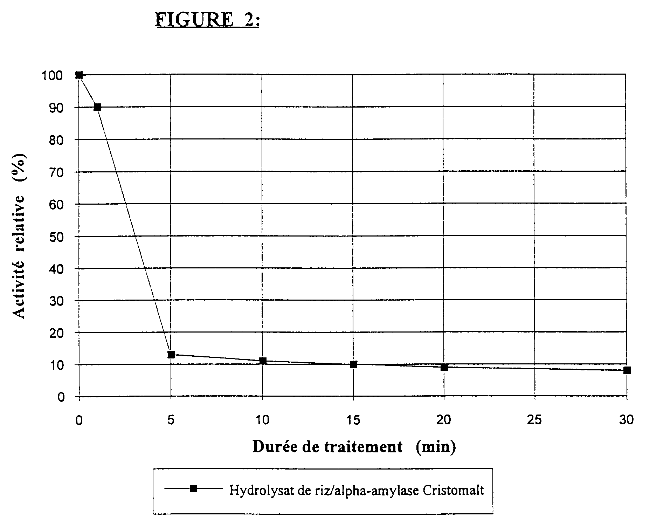

Les résultats sont présentés sur les figures 2 et 3. A 30°C l'activité résiduelle α-amylasique est de 13% de la valeur initiale après 5 min de traitement, et de 10% après 15 min de traitement. A 60°C l'activité résiduelle α-amylasique est de 6% après 5 min de traitement, et inférieure à 4% après un traitement de 15 min.

### Exemple 5

On réalise une hydrolyse d'une farine de riz par l'α-amylase bactérienne B100 dans les mêmes proportions que celles décrites à l'exemple 3, à la différence que l'on remplace la cuisson du mélange à la vapeur à 135°C par un traitement à une haute pression hydrostatique (à la vapeur à 80°C) pour gélifier et stériliser le mélange.

Pour cela, on mélange premièrement 200kg/h de farine de blé et 164kg/h d'eau. On conduit le mélange dans un autoclave dans lequel on applique une pression hydrostatique de 400MPa à une température de 80°C pendant 15 min. On le réintroduit dans une cuve étanche à double paroi où une pression égale à la pression de vapeur du mélange à 80°C est maintenue à l'aide d'un condensateur. On déverse dans cette même cuve 30kg/h de l'α-amylase B100 diluée de manière à ce que le mélange comprenne 0,1% de poudre d'enzyme par poids de matière sèche. Le mélange doucement agité séjourne 5 min dans cette première cuve, puis est introduit dans une cuve d'attente à paroi double et mélangeur où l'on maintient une température de 80°C à pression atmosphérique pendant 15 mm.

Puis, on divise le flot de liqueur sortant de la dernière cuve en deux courants, l'un de 421kg/h que l'on recycle au mélange non gélatinisé, et l'autre de 422kg/h que l'on récupère dans des récipients déformables en plastique. On soumet finalement le mélange hydrolysé à une pression hydrostatique de 650MPa à une température de 90°C pendant 30 min, de la même manière que celle décrite à l'exemple 1.

### Exemple 6

On réalise une hydrolyse d'une farine de blé par l'α-amylase B100 dans les mêmes conditions et proportions que celles décrites à l'exemple 3, à la différence que l'on mélange, avant l'étape d'inactivation par haute pression hydrostatique, 9 parties du mélange hydrolysé non recyclé à 1 partie de graisse végétale, et que l'on sèche par pulvérisation le mélange préalablement inactivé à 650MPa et à 60°C pendant 30 min.

On obtient une poudre très fluide, agréablement odorante, qui se dissout très bien dans l'eau aussi bien froide que chaude, et qui ne présente aucune dégradation de l'amidon après plusieurs mois de conservation en boîte métallique, sous atmosphère inerte et à température ambiante. Elle constitue une base de première qualité pour la préparation de boissons instantanées pour le petit déjeuner.

## Revendications

1. Procédé de fabrication d'un produit alimentaire amylacé, dans lequel on prépare un mélange comprenant au moins une matière amylacée et de l'eau, on le gélifie, on le soumet à une hydrolyse enzymatique, puis à une pression hydrostatique de 300-1100 MPa et à une température de 10-90°C.

2. Procédé selon les revendications 1, dans lequel on soumet ledit mélange à une pression hydrostatique de 400-1000 MPa et à une température de 30-70°C.

3. Procédé selon la revendication 1, dans lequel on gélifie le mélange en le soumettant à une pression hydrostatique de 100-1100 MPa et à une température de 10-120°C.

4. Procédé selon la revendication 1, dans lequel la matière amylacée est une semoule ou une farine de graines de céréales notamment le blé, riz, maïs, orge, avoine et seigle, et/ou de graines de légumineuses notamment le soja, et/ou de tubercules notamment la pomme de terre, et/ou de racines notamment le céleri et la betterave.

5. Procédé selon la revendication 1, dans lequel le mélange est hydrolysé par une invertase ou une enzyme saccharolytique choisie dans le groupe formé par des α-amylases, des β-amylases, des pullulanases et des glucoamylases.

6. Procédé selon la revendication 1, dans lequel on ajoute au mélange, avant ou après hydrolyse, des compléments nutritifs, notamment des solides du lait écrémé ou du petit lait ou des matières grasses avant de le soumettre à ladite pression hydrostatique.

7. Procédé selon la revendication 1, dans lequel on sèche une partie au moins du mélange par pulvérisation.

8. Procédé selon la revendication 7 dans lequel on ajoute des compléments nutritifs au mélange, notamment du lactose, avant de le soumettre à la pression hydrostatique, et on le soumet à une fermentation, notamment par des bactéries lactiques, après l'avoir soumis à ladite pression hydrostatique et avant de le sécher par pulvérisation.

9. Procédé selon l'une des revendications 1 à 8, dans lequel pour préparer ledit mélange hydrolysé, on prépare un premier mélange de matière amylacée et d'eau, on le cuit et on le liquéfie par hydrolyse enzymatique, puis on prépare un second mélange de matière amylacée, d'eau et d'une partie au moins du premier mélange liquéfié, on cuit le second mélange, on le liquéfie par hydrolyse enzymatique, et on le soumet à une pression hydrostatique de 300-1100 MPa et à une température de 10-90°C.

## Claims

1. Process for manufacturing a starch-based food product, wherein a mixture is prepared comprising at least one starch-based material and water, it is gelled and subjected to enzymatic hydrolysis, and is then subjected to a hydrostatic pressure of 300-1100 MPa and to a temperature of 10-90°C.

2. Process according to claim 1, wherein the said mixture is subjected to a hydrostatic pressure of 400-1000 MPa and to a temperature of 30-70°C.

3. Process according to claim 1, wherein the mixture is gelled by subjecting it to a hydrostatic pressure of 100-1100 MPa and to a temperature of 10-120°C.

4. Process according to claim 1, wherein the starch-based material is a semolina or flour from cereal grains, in particular of wheat, rice, maize, barley, oats and rye, and/or seeds of leguminous plants, in particular soya, and/or tubers, in particular potatoes, and/or roots, in particular celery and sugar beet.

5. Process according to claim 1, wherein the mixture is hydrolysed by an invertase or a saccharolytic enzyme selected from the group consisting of α-amylases, β-amylases, pullulanases and gluco-amylases.

6. Process according to claim 1, wherein nutritive complements are added to the mixture, before or after hydrolysis, in particular skimmed milk solids or butter milk solids or fats before subjecting the mixture to the said hydrostatic pressure.

7. Process according to claim 1, wherein at least part of the mixture is spray-dried.

8. Process according to claim 7, wherein nutritive complements are added to the mixture, in particular lactose, before it is subjected to hydrostatic pressure, and the said mixture is subjected to fermentation, in particular by lactic bacteria, after having been subjected to the said hydrostatic pressure and before it is spray-dried.

9. Process according to one of claims 1 to 8, wherein, in order to prepare the said hydrolysed mixture, a first mixture is prepared of a starch-based material and water, it is cooked and liquefied by enzymatic hydrolysis, a second mixture is then prepared of a starch-based material, water and at least part of the first liquefied mixture, the second mixture is cooked, is liquefied by enzymatic hydrolysis and is subjected to a hydrostatic pressure of 300-1100 MPa and to a temperature of 10-90°C.

## Patentansprüche

1. Verfahren zur Herstellung eines stärkehaltigen Nahrungsmittels, bei dem man eine Mischung herstellt, die wenigstens ein stärkehaltiges Material und Wasser enthält, diese geliert, einer enzymatischen Hydrolyse und danach einem hydrostatischen Druck von 300-1100 MPa und einer Temperatur von 10-90°C unterwirft.

2. Verfahren nach Anspruch 1, bei dem man die Mischung einem hydrostatischen Druck von 400-1000 MPa und einer Temperatur von 30-70°C unterwirft.

3. Verfahren nach Anspruch 1, bei dem man die Mischung geliert, indem man sie einem hydrostatischen Druck von 100-1100 MPa und einer Temperatur von 10-120°C unterwirft.

4. Verfahren nach Anspruch 1, bei dem das stärkehaltige Material Grieß oder Mehl von Getreidekörnern, insbesondere von Weizen, Reis, Mais, Gerste, Hafer und Roggen, und/oder Hülsenfruchtkörnern, insbesondere von Soja, und/oder Knollen, insbesondere Kartoffeln, und/oder Wurzeln, insbesondere Sellerie und Rüben ist.

5. Verfahren nach Anspruch 1, bei dem die Mischung mit einer Invertase oder einem saccharolytischen Enzym hydrolysiert wird, das aus der Gruppe ausgewählt ist, die von α-Amylasen, β-Amylasen, Pullulanasen und Gluco-amylasen gebildet wird.

6. Verfahren nach Anspruch 1, bei dem man der Mischung, vor oder nach der Hydrolyse, Anreicherungs-Nährstoffe zugibt, insbesondere Magermilch-Feststoffe oder Molke-Feststoffe oder Fette, bevor man sie dem hydrostatischen Druck unterwirft.

7. Verfahren nach Anspruch 1, bei dem man wenigstens einen Teil der Mischung sprühtrocknet.

8. Verfahren nach Anspruch 7, bei dem man Anreicherungs-Nährstoffe der Mischung zugibt, insbesondere Lactose, bevor man sie dem hydrostatischen Druck unterwirft, und man sie einer Fermentation unterwirft, insbesondere mit Milchsäurebakterien, nachdem man sie dem hydrostatischen Druck unterworfen hat und bevor man sie sprühtrocknet.

9. Verfahren nach einem der Ansprüche 1 bis 8, bei dem zur Herstellung der hydrolysierten Mischung eine erste Mischung aus dem stärkehaltigen Material und Wasser herstellt, man diese kocht und durch enzymatische Hydrolyse verflüssigt, wonach man eine zweite Mischung aus einem stärkehaltigen Material, Wasser und wenigstens einem Teil der ersten verflüssigten Mischung herstellt, man die zweite Mischung kocht, man sie durch enzymatische Hydrolyse verflüssigt, und sie einem hydrostatischen Druck von 300-1100 MPa und einer Temperatur von 10-90°C unterwirft.
